Europäisches Patentamt

European Patent Office

Office européen des brevets

(19)

(11) **EP 0 974 816 A1**

(12) ## DEMANDE DE BREVET EUROPEEN

(43) Date de publication:
**26.01.2000 Bulletin 2000/04**

(51) Int Cl.[7]: **G01F 1/66**, G01F 1/74

(21) Numéro de dépôt: **99470015.1**

(22) Date de dépôt: **11.06.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **25.06.1998 FR 9808185**

(71) Demandeur: **SOLLAC**
**92800 Puteaux (FR)**

(72) Inventeurs:
• **Ferrin, Alvaro Louis**
**57000 Metz (FR)**
• **Dethorey, Gérard Marie**
**57000 Metz (FR)**

(74) Mandataire: **Ballot, Paul Denis Jacques**
**Cabinet Ballot-Schmit,**
**18, Place du Forum**
**57000 Metz (FR)**

(54) **Procédé et dispositif de mesure d'un débit de matière solide à l'état divisé**

(57) Selon l'invention, on mesure, au moyen d'un capteur acoustique (41), l'intensité V d'un signal acoustique généré, dans la conduite (23) de transport pneumatique de la matière en poudre ou en grains, par le passage de la matière, on mesure l'écart de pression $\Delta P$ du fluide de transport dans ladite conduite, et on déduit que le débit massique de matière est égal à une valeur Q conforme à celle donnée par la relation

$$Q = k \cdot (\Delta P / V) \cdot S,$$

où k est une constante prédéterminée propre à l'installation, et S est la section de passage de la conduite considérée.

Application notamment à la mesure du débit de charbon en poudre dans une installation d'injection de charbons par les tuyères d'un haut-fourneau sidérurgique.

FIG.1

## Description

La présente invention concerne un procédé et un dispositif de mesure d'un débit de matière granulée ou pulvérulente, plus généralement à l'état solide divisé, et s'adresse plus particulièrement à la mesure du débit d'une telle matière quand on la transporte pneumatiquement ou hydrauliquement. Elle vise en particulier le contrôle du débit de charbon dans des installations d'injection de charbon injecté par les tuyères de soufflage du vent.

Il est connu d'injecter du charbon dans les hauts-fourneaux, au niveau des tuyères de soufflage du vent, pour influer sur les conditions thermiques et les réactions métallurgiques qui ont lieu dans la partie basse du haut fourneau, afin notamment d'exercer un meilleur contrôle sur les caractéristiques métallurgiques de la fonte obtenue. Pour cela, classiquement, du charbon en poudre, ou ayant une granulométrie relativement faible, est injecté dans le creuset du haut fourneau par les tuyères, ou par certaines d'entr'elles seulement. Le charbon est transporté jusqu'aux tuyères par transport pneumatique, de manière connue en soi, à partir d'un distributeur de poudre, maintenu sous pression. Ce distributeur est relié par une conduite principale à un répartiteur, d'où partent les différentes lignes qui alimentent chacune une tuyère.

Dans certains cas, il peut être suffisant de connaître la quantité totale de charbon injecté, en veillant seulement à ce que la répartition dans les différentes lignes d'injection soit sensiblement homogène. Le débit total peut alors être déterminé à partir de mesures de poids faites au niveau du distributeur de poudre. Un contrôle de l'homogénéité de la répartition dans les différentes lignes peut être effectué par une détection de débit dans chaque ligne. S'il s'agit d'une simple détection de débit, c'est à dire dans le cas où l'appareillage utilisé fournit une indication en tout ou rien, on peut seulement savoir si une ligne vient à se boucher, mais on ne peut pas connaître de manière fiable les variations de débit pouvant survenir dans les différentes lignes.

Pour améliorer la connaissance du débit de charbon dans chaque ligne d'injection, et pour pouvoir agir en conséquence sur les moyens de distribution et de transport de poudre, il est déjà aussi connu d'utiliser des systèmes de mesure de débit de matériaux à l'état divisé transportés dans des conduites par voie pneumatique. De tels systèmes, tels que celui commercialisé sous le nom de GRANUCOR®, utilisent une mesure de type capacitif, pour déterminer la concentration C de poudre dans la conduite de transport, de section S, et un double capteur capacitif avec auto-corrélation pour déterminer la vitesse de déplacement V, et donc en déduire le débit, par utilisation de la loi de conservation de masse :

$$Q = C . V . S.$$

Les mesures de débit effectuées avec ce système sont précises, mais les moyens de mesure capacitifs doivent être placés au contact du matériau transporté, ce qui, dans la pratique, nécessite d'interposer les capteurs dans la conduite de transport, et donc de prévoir les coupes requises pour l'implantation des capteurs dans les conduites de toutes les lignes d'injection. Un autre handicap de ces systèmes est leur coût élevé qui devient vite prohibitif si l'on souhaite équiper par exemple toutes les lignes d'injection de charbon d'un haut fourneau. De plus, ils présentent l'inconvénient majeur d'imposer, pour une mesure du débit de matière, un étalonnage minutieux du capteur de concentration, au demeurant très sensible aux variations d'humidité du produit injecté.

Dans le domaine de la détection de débit de matières pulvérulentes ou en grains ou encore de boues, on connaît aussi des capteurs qui détectent un état de passage ou de non-passage de matière par exemple dans une tuyauterie, et fournissent en réponse un signal de sortie pouvant activer des alarmes ou autres appareils prévus à cet effet. Ces capteurs fonctionnent par détection d'émissions acoustiques, généralement en haute fréquence, de l'ordre de 150 KHz, générées par les frictions ou impacts de la poudre ou des grains sur la paroi de la conduite. Les capteurs détectent les résonnances hautes fréquences dans une bande de fréquences étroite, lorsque ces résonnances se propagent dans les tuyauteries ou dispositifs de réception. Ces capteurs présentent l'avantage de pouvoir être mis en place très facilement sur les conduites, par exemple par une simple fixation boulonnée au niveau d'une bride de raccord de tuyauteries. Par contre, ils présentent l'inconvénient signalé précédemment pour les systèmes de détection fonctionnant en "tout ou rien".

La présente invention a pour but de résoudre les différents problèmes évoqués ci-dessus, et vise en particulier à fournir un système de mesure de débit de matières pulvérulentes ou granuleuses, transportés pneumatiquement dans des conduites, qui puisse donner une bonne indication de la valeur exacte du débit de matière dans une conduite, et ceci à moindre coût. Elle vise en particulier à permettre une mesure du débit de charbon ou de toute autre matière solide à l'état divisé dans chaque ligne d'injection de matières aux tuyères d'un haut fourneau sidérurgique (ou dans un autre réacteur industriel pouvant recevoir une matière injectée).

Avec ces objectifs en vue, l'invention a pour objet un procédé de mesure du débit massique d'une matière solide granulée ou pulvérulente circulant dans une conduite et dont le transport est assuré par un fluide sous pression, caractérisé en ce que on mesure l'intensité V d'un signal acoustique généré dans la conduite par le passage de la matière, on mesure l'écart de pression $\Delta P$ du fluide de transport dans ladite conduite, et on déduit que le débit massique de matière transportée est une valeur Q conforme à ce que donne la relation :

$$Q = k \cdot (\Delta P/V) \cdot S \;,$$

où k est une constante prédéterminée propre à l'installation, et S est la section de passage de la conduite considérée.

Dans l'application préférée, pour la mesure du débit de poudre de charbon dans une installation d'injection de charbon aux tuyères d'un haut fourneau, où chaque tuyère est alimentée par une conduite de transport spécifique la reliant à un répartiteur d'alimentation d'une pluralité de tuyères, l'écart de pression $\Delta P$ est déterminé par la différence d'une valeur de pression de transport mesurée en aval du dit répartiteur et de la pression mesurée au niveau de la tuyère d'injection.

L'invention repose en fait sur l'idée de remplacer la mesure de concentration de poudre utilisée dans les systèmes de mesure par capteur capacitif et autocorrélation, selon l'état de la technique décrit au début de ce mémoire, par une mesure de pressions et une mesure d'un paramètre représentatif de la vitesse d'écoulement de la poudre dans les conduites, à partir desquelles mesures le débit pourra être déterminé par utilisation de la formule ci-dessus, après bien sûr un étalonnage requis pour déterminer la constante k.

Les mesures de pressions sont en général faciles à effectuer et, dans le cas de l'application sur un haut fourneau, bénéficient du fait que des capteurs de pressions sont généralement déjà installés au niveau de tuyères, et que la mise en place de pressostats en tête des lignes d'injection est de réalisation aisée, ou même ces pressostats existent déjà sur l'installation.

Par ailleurs, la mesure de l'activité acoustique V, représentative de la vitesse d'écoulement, peut être effectuée aisément par un capteur facilement adaptable sur la conduite, comme on va le voir ensuite, et dont le coût est relativement faible par comparaison aux dispositif de mesure selon l'état de la technique.

L'invention a donc aussi pour objet un dispositif de mesure du débit massique d'une matière solide granulée ou pulvérulente circulant dans une conduite et dont le transport est assuré par un fluide sous pression, caractérisé en ce qu'il comporte des moyens de mesure d'un écart de pression $\Delta P$ dudit fluide dans ladite conduite, des moyens de mesure de l'intensité V d'un signal acoustique généré dans la conduite par le passage de la matière, et des moyens de calcul pour calculer le débit massique Q par la formule

$$Q = k \cdot (\Delta P/V) \cdot S \;,$$

où k est une constante prédéterminée propre à l'installation, et S est la section de passage de la conduite considérée.

Selon d'autres caractéristiques :

- les moyens de mesure de l'intensité du signal acoustique comportent un capteur acoustique fixé sur la conduite, à l'extérieur de celle-ci,
- le capteur acoustique est fixé sur l'extrados d'une portion coudée de la conduite,
- le capteur est un capteur réagissant à des fréquences ultrasonores, par exemple 150 ou 450 KHz, dans une bande de fréquences étroite.

D'autres caractéristiques et avantages apparaîtront dans la description qui va être faite, à titre d'exemple nullement limitatif, d'une application de l'invention dans une installation de haut-fourneau sidérurgique, pour mesurer le débit de charbon en poudre dans chaque ligne d'injection de charbon aux tuyères.

On se reportera aux dessins annexés dans lesquels :

- la figure 1 est une représentation schématique et simplifiée de l'installation d'injection de charbon,
- la figure 2 montre l'implantation du capteur sur une conduite,
- la figure 3 est un graphique montrant les résultats d'essais menés pour évaluer la relation entre l'intensité V du signal acoustique et la vitesse réelle v de la poudre de charbon,
- la figure 4 montre les résultats d'essais illustrant la correspondance entre le rapport $\Delta P/V$ et le débit massique réel Q de charbon injecté, dans deux lignes d'injection,
- la figure 5 montre l'évolution du débit massique Q de charbon dans le temps lors d'un essai, un tracé représentant le débit réel mesuré, et l'autre le débit calculé conformément à l'invention.

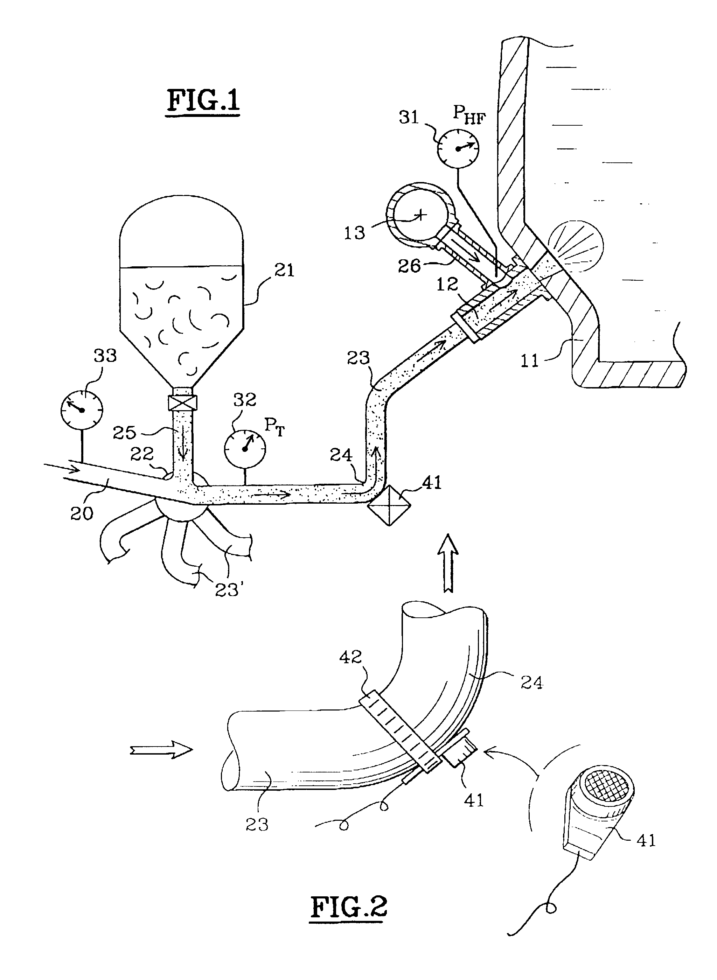

Sur le dessin de la figure 1 on a représenté schématiquement et partiellement la partie inférieure de la cuve 11 d'un haut fourneau dans laquelle débouchent les tuyères 12 d'alimentation du vent reliées, par des descentes de vent 26, à la nourrice circulaire de vent 13 qui entoure le haut fourneau au niveau des étalages.

L'installation d'injection de charbon en poudre comporte un distributeur de poudre 21, qui contient le charbon pulvérulent et qui est par ailleurs mis sous une certaine pression d'air, pour assurer une certaine fluidification de la poudre et permettre son transport. La sortie du distributeur de poudre 21 est reliée par une conduite 25 de relativement grand diamètre (de l'ordre de 100 mm pour fixer les idées) à un répartiteur 22 d'où partent toutes les lignes de transport de charbon, chaque ligne comportant une conduite 23, de diamètre relativement petit, par exemple de 20 à 25 mm, reliant le distributeur 21 à une tuyère.

Le distributeur a été représenté schématiquement sur la figure 1, de même que l'on n'a représenté que le départ de quelques autres lignes 23'. Il est rappelé que la figure 1 est très schématique et que, notamment pour des raisons de plus grande clarté des dessins, les proportions dimensionnelles entre les lignes d'injection de charbon et la circulaire 13 et les tuyères de vent 12 n'y ont pas été respectées.

Le dessin de la figure 1 montre également les moyens de mesure de pression équipant l'installation, à savoir, pour chaque ligne : un premier manomètre 31 raccordé sur la descente de vent 26 pour mesurer la pression $P_{HF}$ au débouché dans les tuyères des conduites 23 de transport de charbon, et un second manomètre 32 raccordé sur la conduite de transport 23, juste en aval du répartiteur 22, et mesurant la pression de transport $P_T$. Un troisième manomètre 33 est installé de manière classique directement sur l'alimentation de la conduite principale de transport 20, raccordée sur le répartiteur 22. En toute rigueur, la différence de pression entre les extrémités de la ligne pourrait être mesurée par la différence des valeurs données par les deux manomètres 33 et 31. Toutefois, l'utilisation du deuxième manomètre 32 en sortie du répartiteur 22 permet d'avoir une mesure plus précise de la pression de transport $P_T$ à l'entrée de chaque ligne, en s'affranchissant des éventuelles perturbations provenant des autres lignes.

Chaque ligne 23 est équipée par ailleurs d'un capteur acoustique 41, fixé sur la tuyauterie par exemple par un simple collier de serrage 42 (figure 2) ou par des vis, ou d'autres moyens de fixation classiques. Le capteur 41 est placé à l'extrados d'un coude 24 de la tuyauterie. Les inventeurs ont vérifié que cette situation est particulièrement recommandée pour obtenir une mesure fiable, comme on le verra par la suite.

Le capteur utilisé est préférentiellement un capteur de vibrations acoustiques fonctionnant à haute fréquence, 150 Khz par exemple, et apte à mesurer l'intensité acoustique dans des bandes de fréquence étroites. On pourra par exemple utiliser un capteur tel que celui commercialisé sous la dénomination "Détecteur de Débit Solide SENACO" (marque déposée) par la société MILLTRONICS.

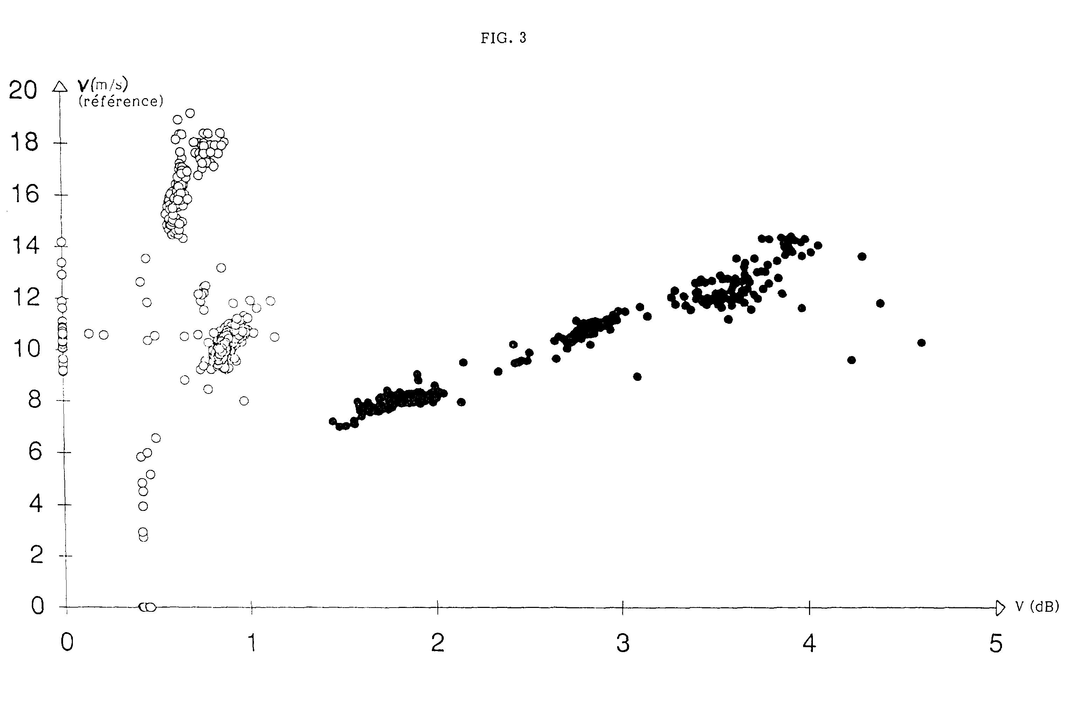

Le graphique de la figure 3 montre les résultats d'essais comparatifs effectués en plaçant le capteur acoustique en différents endroits de la tuyauterie. Chaque point correspond à une mesure, et a pour abscisse la valeur V de la mesure effectuée par le capteur acoustique 41, et pour ordonnée la vitesse v réelle de la poudre, déterminée par le système de mesure de référence.

Les points blancs correspondent à des mesures effectuées avec le détecteur acoustique 41 placé en un point de la tuyauterie proche du répartiteur, et les points noirs correspondent à des mesures effectuées avec le détecteur 41 placé à l'extrados d'un coude de la tuyauterie, comme indiqué préalablement. On constate immédiatement que, dans cette dernière disposition, il existe une relation nette, quasi-linéaire, d'ailleurs, entre le signal mesuré V et la vitesse réelle v de la poudre, alors que la dispersion des points blancs montre que la disposition du capteur proche du répartiteur ne permettrait pas de déterminer la vitesse à partir du signal du capteur acoustique.

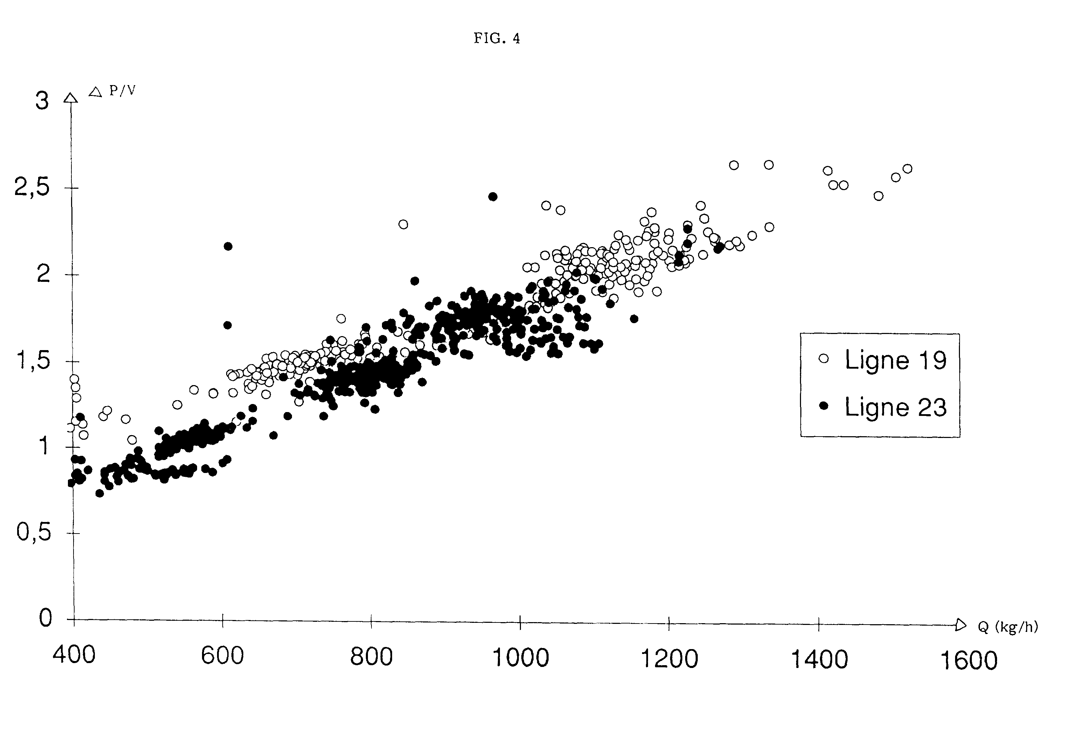

Le graphique de la figure 4 illustre la bonne corrélation obtenue grâce à l'invention entre la valeur ΔP/V obtenue par calcul et le débit massique Q correspondant de charbon mesuré par ailleurs et servant de référence. On constate en effet, sur les deux lignes d'injection pour lesquelles les résultats de mesures ont été représentés sur la figure (série de points blancs et série de points noirs), la proportionnalité entre la valeur de ΔP/V et le débit réel de charbon.

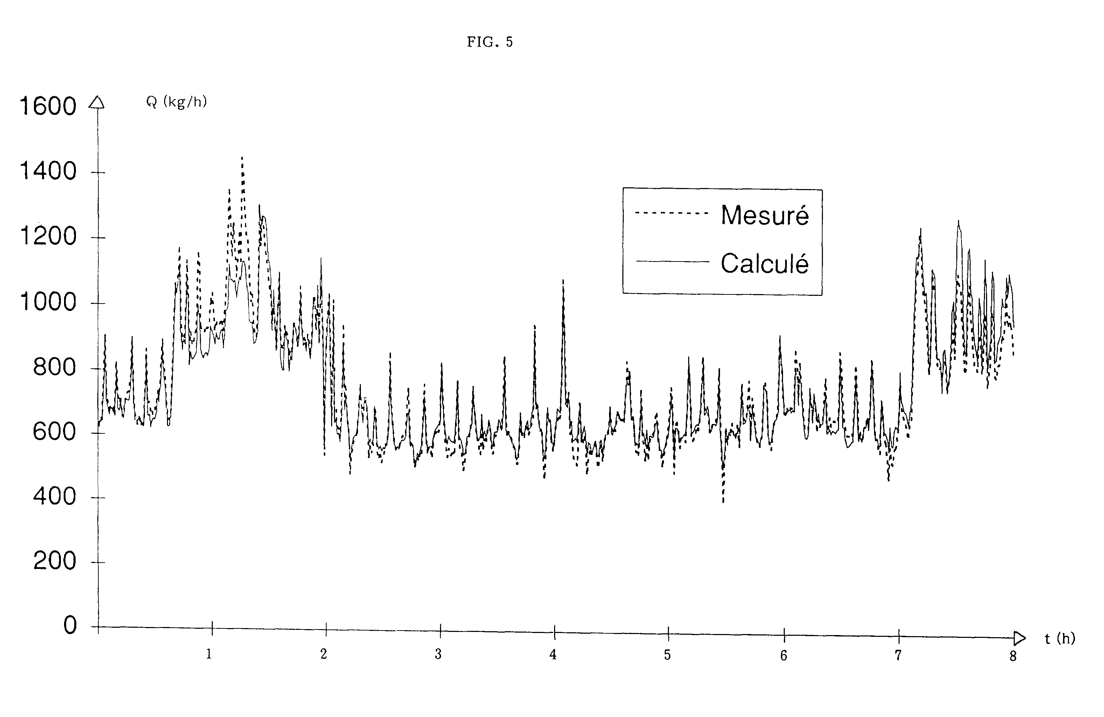

On retrouve cette relation étroite entre le débit effectif de charbon et le débit déterminé conformément à l'invention, sur la figure 5 qui illustre le suivi de ce débit sur une ligne d'injection pendant une durée de plus de huit heures. Le tracé en traits discontinus correspond aux valeurs de débits de référence, mesuré par un dispositif du type à mesure de concentration et auto-corrélation, et le tracé en trait fin continu correspond aux valeurs de débit calculés conformément à l'invention. On voit aisément que les deux tracés se chevauchent presque parfaitement sur toute la durée de l'essai.

Le procédé et le dispositif selon l'invention permettent donc bien de mesurer le débit de charbon en poudre dans des lignes d'injection de charbon aux tuyères de hauts fourneaux. L'invention n'est toutefois pas limitée à ces applications, et on pourra en particulier l'utiliser pour mesurer des débits de nombreuses autres matières transportées pneumatiquement, telles que par exemple des matériaux pulvérulents ou granulés de l'industrie agro-alimentaire.

Par ailleurs, l'invention n'est pas non plus limitée à l'utilisation du capteur mentionné ci-dessus à titre d'exemple. L'invention peut en fait tirer parti de tout capteur acoustique capable de fournir un signal analogique d'intensité variable en fonction du bruit généré dans la paroi d'une tuyauterie par le passage d'un matériau pulvérulent ou en grains, dans des conditions permettant de relier le signal obtenu à la vitesse de déplacement du dit matériau.

## Revendications

1. Procédé de mesure du débit massique d'une matière solide granulée ou pulvérulente circulant dans une conduite (23) et dont le transport est assuré par un fluide sous pression, caractérisé en ce que on mesure l'intensité V d'un signal acoustique généré dans la conduite par le passage de la matière, on mesure l'écart de pression ΔP du fluide de transport dans ladite conduite, et on déduit que le débit massique de matière transportée est une valeur Q conforme à celle donnée par la relation :

$$Q = k \cdot (\Delta P/V) \cdot S,$$

où k est une constante prédéterminée propre à l'installation, et S est la section de passage de la conduite considérée.

**2.** Procédé selon la revendication 1, caractérisé en ce que on l'applique à la mesure du débit de poudre de charbon dans une installation d'injection de charbon aux tuyères d'un haut fourneau (11), où chaque tuyère (12) est alimentée par une conduite de transport spécifique (23) la reliant à un répartiteur (22) d'alimentation d'une pluralité de tuyères, et en ce qu'on détermine l'écart de pression $\Delta P$ par la différence d'une valeur de pression de transport ($P_T$) mesurée en aval du dit répartiteur et de la pression ($P_{HF}$) mesurée au nez de la tuyère d'injection.

**3.** Dispositif de mesure du débit massique d'une matière solide granulée ou pulvérulente circulant dans une conduite (23) et dont le transport est assuré par un fluide sous pression, caractérisé en ce qu'il comporte des moyens (31, 32) de mesure d'un écart de pression $\Delta P$ du fluide de transport dans ladite conduite, des moyens (41) de mesure de l'intensité V d'un signal acoustique généré dans la conduite (23) par le passage de la matière, et des moyens de calcul pour calculer le débit Q par la formule

$$Q = k \cdot (\Delta P / V) \cdot S \, ,$$

où k est une constante prédéterminée propre à l'installation, et S est la section de passage de la conduite considérée.

**4.** Dispositif selon la revendication 3, caractérisé en ce que les moyens de mesure de l'intensité du signal acoustique comportent un capteur acoustique (41) fixé sur la conduite (23), à l'extérieur de celle-ci,

**5.** Dispositif selon la revendication 4, caractérisé en ce que le capteur acoustique (41) est fixé sur l'extrados d'une portion coudée (24) de la conduite.

**6.** Dispositif selon la revendication 3, caractérisé en ce que le capteur (41) est un capteur réagissant à des fréquences ultrasonores, dans une bande de fréquences étroite.

**7.** Installation d'injection matière solide pulvérulente dans un haut fourneau sidérurgique (11), comportant un distributeur matière en poudre (21), un répartiteur (22), et une pluralité de conduites de transport (23) reliant chacune le répartiteur (21) à une tuyère (12) du haut fourneau, caractérisée en ce qu'elle comporte en outre :

- des moyens (32) de mesure de la pression $P_T$ dans chaque conduite (23), en aval et à proximité du répartiteur (22),
- des moyens (31) de mesure de la pression $P_{HF}$ à proximité des tuyères (12),
- des capteurs acoustiques (41), un par conduite, aptes à fournir un signal V représentatif de la vitesse de la poudre dans la conduite, les dits capteurs étant situés sur les conduites aux niveaux de coudes des dites conduites et sur l'extrados des dits coudes, et

- des moyens de calcul reliés aux dits moyens de mesure de pression et aux capteurs acoustiques, pour calculer le débit Q de poudre dans chaque conduite par la formule

$$Q = k \cdot [(P_T - P_{HF}) / V] \cdot S \, ,$$

où k est une constante prédéterminée propre à chaque conduite de transport, et S est la section de passage de la conduite considérée.

## FIG.1

## FIG.2

FIG. 3

EP 0 974 816 A1

FIG. 4

EP 0 974 816 A1

FIG. 5

))) **Office européen
des brevets**

**RAPPORT DE RECHERCHE EUROPEENNE**

Numéro de la demande

EP 99 47 0015

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 415 048 A (DIATSCHENKO VICTOR ET AL) 16 mai 1995 (1995-05-16) * abrégé; figure 1 * | 1,3,7 | G01F1/66 G01F1/74 |
| A | EP 0 499 759 A (BP CHEMICALS SNC ;BRITISH PETROLEUM CO PLC (GB)) 26 août 1992 (1992-08-26) * colonne 6, ligne 12 - colonne 7, ligne 19; figure 3 * | 1,3,7 | |
| A | GB 2 132 761 A (KOBE STEEL LTD) 11 juillet 1984 (1984-07-11) * abrégé; figure 3 * | 1,3,7 | |
| A | MADEFESSEL-HERRMANN K: "SCHUTTSTROME ERKENNEN BERUHRUNGSLOSES MESSPRINZIP ZUR PROZESSKONTROLLE UND GERATESCHUTZ" CHEMIETECHNIK, vol. 23, no. 4, 1 avril 1994 (1994-04-01), page 76/77 XP000447818 | 1,3 | |

DOMAINES TECHNIQUES RECHERCHES (Int.Cl.6)

G01F

Le présent rapport a été établi pour toutes les revendications

| Lieu de la recherche | Date d'achèvement de la recherche | Examinateur |
|---|---|---|
| LA HAYE | 28 septembre 1999 | Boerrigter, H |

CATEGORIE DES DOCUMENTS CITES

X : particulièrement pertinent à lui seul
Y : particulièrement pertinent en combinaison avec un autre document de la même catégorie
A : arrière–plan technologique
O : divulgation non–écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 47 0015

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-09-1999

| Document brevet cité au rapport de recherche | | Date de publication | Membre(s) de la famille de brevet(s) | | Date de publication |
|---|---|---|---|---|---|
| US 5415048 | A | 16-05-1995 | AUCUN | | |
| EP 0499759 | A | 26-08-1992 | AUCUN | | |
| GB 2132761 | A | 11-07-1984 | JP | 60020116 A | 01-02-1985 |
| | | | JP | 60024418 A | 07-02-1985 |
| | | | JP | 59058319 A | 04-04-1984 |
| | | | FR | 2549220 A | 18-01-1985 |

EPO FORM P0460

Pour tout renseignement concernant cette annexe : voir Journal Officiel de l'Office européen des brevets, No.12/82